# EUROPÄISCHE PATENTSCHRIFT

(11) **EP 0 938 651 B1**
(45) Veröffentlichungstag und Bekanntmachung des Hinweises auf die Patenterteilung: **13.02.2002**
(21) Anmeldenummer: 97951907.1
(22) Anmeldetag: 17.11.1997
(51) Int. Cl.: G01K 7/01, G01L 9/08, G01L 19/00

(54) **DRUCK- UND TEMPERATURSENSOR**
PRESSURE AND TEMPERATURE SENSOR
CAPTEUR DE PRESSION ET DE TEMPERATURE

(30) Priorität: 15.11.1996 DE 29619778 U
(43) Veröffentlichungstag der Anmeldung: 01.09.1999
(73) Patentinhaber: Steinel AG, 8840 Einsiedeln (CH)
(72) Erfinder: STEINEL, Heinrich, Wolfgang, D-86825 Bad Wörishofen (DE); NIER, Ekkehart, CH-6417 Sattel (CH)
(74) Vertreter: Behrmann, Niels, Dipl.-Ing.
(86) Internationale Anmeldenummer: EP9706410
(87) Internationale Veröffentlichungsnummer: WO9822787

(56) Entgegenhaltungen:
- DE-A- 4 010 609
- DE-A- 4 225 879
- FRICKE K ET AL: "PRESSURE MEASUREMENT BY GAAS PIEZOELECTRIC SENSORS" ELECTRONICS LETTERS, Bd. 26, Nr. 11, 24.Mai 1990, Seite 693/694 XP000108748
- WIEDEMANN: "EIN SENSOR FUR DRUCK UND TEMPERATUR" ELEKTRONIK, Bd. 36, Nr. 16, 7.August 1987, W.GERMANY, Seiten 74-77, XP002058653

## Beschreibung

Die Erfindung betrifft einen Sensor nach dem Oberbegriff des Anspruches 1.

Derartige Sensoren finden insbesondere bei der Messung eines Werkzeuginnendruckes in einer Spritzgießvorrichtung Verwendung, wobei auf direkte oder indirekte Weise der Schmelzedruck in Druckkammern einer entsprechenden Anlage erfaßt wird.

Während eines solchen Spritzgießprozesses herrscht in der Druckkammer (Kavität) ein von einem jeweiligen Verfahrenszustand abhängiger Innendruckverlauf - von einem steilen Anstieg nach dem Beginn des Einspritzprozesses über einen mehr oder weniger flachen Druckabfall während der Nachdruckphase bis hinab auf Atmosphärendruck. Dabei beeinflussen insbesondere Materialparameter eines zu spritzenden Kunststoffes, die Einspritzgeschwindigkeit oder die Temperaturverhältnisse im Innenraum den Verlauf dieser Kurve. Gerade bei hochpräzisen Teilen kommt es daher auf eine genaue und reproduzierbare Messung der Druckverhältnisse in einem Spritzgießdruckraum an, um die für ein optimales Ergebnis notwendigen, komplexen Steuerungsvorgänge unterstützen zu können.

Dabei hat es sich als wünschenswert herausgestellt, neben dem Druck im Innenraum auch dort die Temperatur messen zu können. Durch einen solchen, zusätzlichen Parameter ließen sich dann nämlich insbesondere noch weitere Steuerungsvorgänge unterstützen, die druckneutral und insoweit durch die Druckmessung allein nicht kontrollierbar sind.

Es ist diesbezüglich bekannt, lokal getrennt von einem herkömmlichen Drucksensor im Innenraum zusätzlich eine Temperaturerfassung vorzusehen, um diesen weiteren Steuerparameter zu erhalten.

Neben dem dafür aber zwangsläufig notwendigen, mechanischen bzw. konstruktiven Aufwand (so müßte etwa ein zweiter Zugang zur Druckkammer geschaffen werden) führen zudem Druck- und Temperaturmeßwerte einer derartigen Anordnung dazu, daß die Temperatur an einem anderen Ort gemessen wird, als ein jeweiliger Druck. Insbesondere für den Fall stark inhomogener Verhältnisse im Innenraum können somit potentiell Fehlmessungen und, dadurch gesteuert, Fehlfunktionen entstehen.

Aus der DE 42 25 879 A1 ist eine Vorrichtung mit den Merkmalen des Anspruches 1 bekannt. Eine derartige Vorrichtung weist jedoch den Nachteil einer sehr langen Hülse zur Kraftübertragung zwischen endseitiger Krafteintragsfläche und dem letztendlich zur Drucksignalerzeugung eingesetzten Piezoelement auf; dazu kommen weitere, dazwischenliegende mechanische Übertragungselemente. Durch diese konstruktive Gestaltung, die angesichts der Ausbildung und Anordnung der Sensoranordnung auch nicht anders gegeben scheint, verringert sich jedoch die Ansprechgeschwindigkeit und die maximale Betriebsfrequenz des Sensors bei einem stark schwankenden Drucksignal drastisch, so dass eine solche, bekannte Vorrichtung insbesondere in komplexen, sehr schnell ablaufenden Betriebsvorgängen deutliche Nachteile aufweist.

Aufgabe der vorliegenden Erfindung ist es daher, insbesondere für eine Parametererfassung in einem Innenraum von Spritzgießvorrichtungen einen gattungsgemäßen Sensor für eine Druck- und Temperaturerfassung zu schaffen, welcher einfach und mit wenig Aufwand auch für herkömmlich vorhandene, lediglich für Druckmessung ausgerichtete Spritzgießvorrichtungen geeignet ist, und welcher eine verbesserte Druck- und Temperaturmessung mit verkürzten Ansprechzeiten und höherer Grenzfrequenz gestattet.

Die Aufgabe wird durch den Druck- und Temperatursensor mit den Merkmalen des Anspruches 1 gelöst.

Vorteilhaft ermöglicht das direkt in den Druckkörper eingesetzte, thermoelektrische Detektorelement das lokale Erfassen der Temperatur direkt am Ort der Druckmessung, ohne daß zusätzliche Vorkehrungen im Druckraum geschaffen werden müssen oder etwa der Durchmesser eines Sensors erhöht werden müßte. Auch ist es erfindungsgemäß in vorteilhafter Weise erreicht, daß durch die Anordnung der Temperaturerfassung im Druckkörper selbst, und somit in unmittelbarer Nähe der Temperaturquelle, eine reaktionsschnelle und kurzfristige Temperaturerfassung erfolgen kann, die insbesondere für Prozeßvorgänge notwendig ist, die selbst relativ kurz sind.

Vorteilhafte Weiterbildungen der Erfindung sind in den Unteransprüchen beansprucht.

So wird besonders bevorzugt der Druckkörper mit kreisförmigem Querschnitt ausgebildet und für einen Einsatz in bereits für herkömmliche Drucksensoren vorhandene Öffnungen eines Durchmessers etwa von 4 mm dimensioniert. Dies erlaubt besonders einfach das Umrüsten existierender Spritzgießanlagen.

Auch hat es sich als vorteilhaft erwiesen, flache, plättchenförmige Kristallelemente als Druckdetektoren einzusetzen, da auf diese Weise eine Optimierung des elektrischen Drucksignals möglich ist.

Die Wahl des thermoelektrischen Sensorelements als Mantelthermoelement gestattet überdies eine vollständige kapazitive Abschirmung, die insbesondere im Hinblick auf die benachbarte Druckerfassung sinnvoll ist.

Gemäß einer bevorzugten Weiterbildung ist zudem das Thermoelement in der Druckangriffsfläche freiliegend ausgebildet. Hierdurch läßt sich die thermische Ansprechzeit weiter minimieren.

Zur kontaktsicheren, gleichwohl aber einfach zu fertigenden Kontaktierung eines erfindungsgemäßen Druck- und Temperatursensors bietet es sich insbesondere an, die Kontakteinrichtung als Koaxial-Steckverbindung auszuführen, wobei diese auch bevorzugt -- entsprechend der Anzahl von herauszuführenden, elektrischen Polen -- mehrschalig aufgebaut sein kann, oder eine Schale von mehreren Polen zur Kontaktierung benutzt wird.

Weitere Vorteile, Merkmale und Einzelheiten der Erfindung ergeben sich aus der nachfolgenden Beschreibung von Ausführungsbeispielen sowie anhand der Zeichnungen; diese zeigen in
- Fig. 1:: eine Perspektivansicht des erfindungsgemäßen Druck- und Temperatursensors;
- Fig. 2:: eine axiale Schnittansicht durch den erfindungsgemäßen Druck- und Temperatursensor gemäß einer ersten Ausführungsform und
- Fig. 3:: eine axiale Schnittansicht durch den erfindungsgemäßen Druck- und Temperatursensor gemäß einer zweiten, alternativen Ausführungsform der Erfindung.

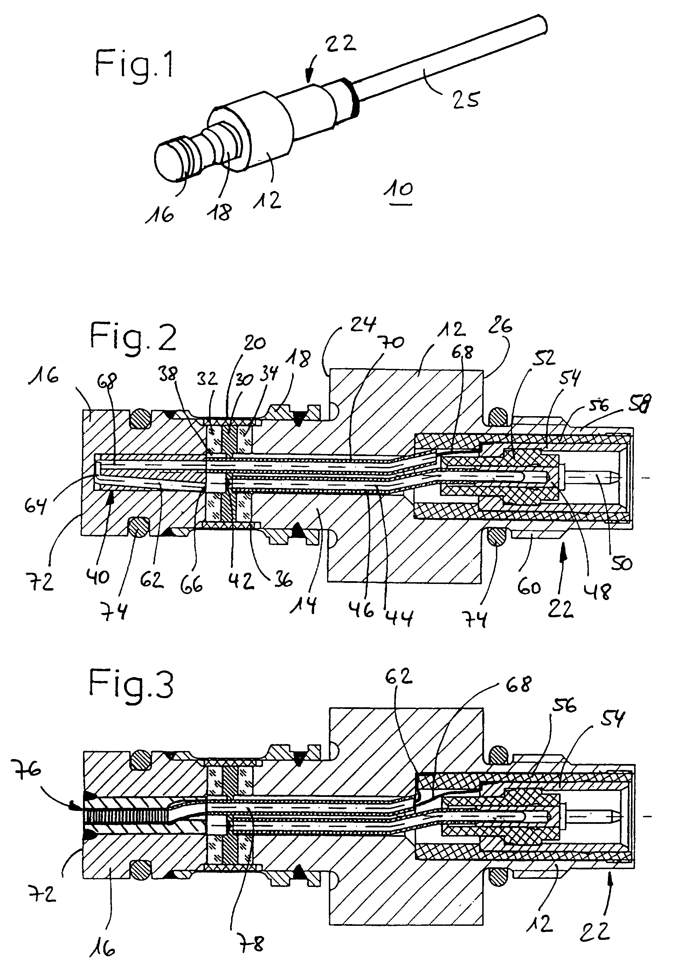

Der insbesondere als Innendruck- und Temperatursensor für eine direkte Schmelzedruckmessung in einem Spritz- oder Gießwerkzeug vorgesehene Sensor 10 weist ein zylindrisches Sensorgehäuse 12 aus Stahl auf, welches druckseitig mit einem zylindrischen Druckkörper 16 als Druckelement zusammenwirkt. Der Druckkörper 16, der im dargestellten Ausführungsbeispiel einen Außendurchmesser von etwa 4 mm besitzt, ist über eine stählerne Vorspannhülse 18, die einen Gehäuseansatz 14 des Sensorgehäuses 12 übergreift, druckelastisch mit dem Sensorgehäuse 12 verbunden. Wie in den Fig. 2 bzw. 3 gezeigt, ist die Vorspannhülse 18 sowohl mit dem Druckkörper 16 als auch mit dem Gehäuseansatz 14 verschweißt und weist in ihrem mittleren Bereich eine eine elastische Verformung ermöglichende, dünne Deformationsstelle 20 auf.

Am dem Druckkörper 16 entgegengesetzten Ende des Sensorgehäuses 12 ist ein Steckerabschnitt 22 vorgesehen. Mittels einer in den Fig. nicht gezeigten Überwurfmutter od.dgl. Befestigungsorgan wird die Sensoranordnung 10 --mit einem vorderen Ringabsatz 24 bzw. einem rückwärtigen Ringabsatz 26 des Gehäuses 12 als Widerlager -- an der Kavität bzw. an der gewünschten Stelle im Einspritzraum befestigt.

Eine (bezogen auf die Druckrichtung) rückwärtig herausgeführte Versorgungsleitung 25 führt die elektrischen Anschlüsse der in der Sensoreinheit vorgesehenen Erfassungselemente zu einer damit verbindbaren, nicht näher gezeigten elektronischen Erfassungs- und Auswerteinheit.

Wie in der Fig. 2 im Detail gezeigt, besteht der von der Deformationsstelle 20 der Vorspannhülse 18 umschlossene Übergangsbereich zwischen dem Druckkörper 16 und dem Gehäuseansatz 14 des Sensorgehäuses aus einer Anordnung verschiedener plattenförmiger Elemente, die sich i.w. radialsymmetrisch um eine Längsachse durch die Sensoranordnung erstrecken: Ein Kontaktplättchen 30 aus leitendem Material wird beidseitig von einer ersten bzw. zweiten Quarzscheibe 32, 34 begrenzt, so daß jeweils die aufeinander zugewandten Flächen der Quarzscheiben 32, 34 das mittlere Kontaktplättchen 30 kontaktieren, während die jeweils einander abgewandten Seiten der Quarzscheiben 32, 34 den Druckkörper 16 bzw. den Gehäuseansatz 14 des Sensorgehäuses 12 elektrisch leitend kontaktieren.

Ein mantelförmiger Isolierring 36 aus Teflonmaterial oder Keramik umschließt die aus erster Quarzscheibe 32, Kontaktplättchen 30 und zweiter Quarzscheibe 34 gebildete Anordnung und bildet so eine Isolation gegenüber der umgebenden Vorspannhülse 18.

Auch weist die Anordnung aus erster Quarzscheibe 32, Kontaktplättchen 30 und zweiter Quarzscheibe 34 einen zentrischen Durchbruch 38 für das Hindurchführen -- unten noch näher zu erläuternder -- Signalleitungen für das im Druckkörper 16 angeordnete Thermoelement 40 auf.

Auf diese Weise ist dann über die metallische Vorspannhülse 18 eine elektrisch leitende Masseverbindung zwischen dem Druckkörper 16 und dem Gehäuse 12 geschaffen; gleichzeitig ist durch Wirkung des Isoliermantels 36 aus isolierendem Material sowohl das Kontaktplättchen 30 als auch jede Mantelfläche der Quarzscheiben 32, 34 gegenüber diesem Massepotential isoliert.

Durch eine solche Anordnung entsteht eine elektrische Parallelschaltung der beiden Quarzscheiben 32, 34, wobei das Kontaktplättchen 30 -- mit den jeweiligen, einander zugewandten Flächen der Quarzplättchen verbunden -- insoweit als gemeinsamer Signalkontakt für durch die Quarzscheiben 32, 34 zu erzeugende Ladungen wirkt, während die jeweiligen, abgewandten Seiten der Quarzscheiben parallel zueinander auf Masse gelegt sind.

Über einen Kontaktanschluß 42 wird das Kontakt- bzw. Signalplättchen 30 mit einer Drucksignalleitung 44 verbunden, welche wiederum einen elektrischen Isolationsmantel (Isolierschlauch) 46 aufweist.

Die elektrische Drucksignalleitung 44 ist bis zu einer Aufnahme 48 für eine Kontaktnadel 50 im Steckerabschnitt 22 geführt und mit dieser verbunden, so daß die Kontaktnadel 50 das sich am Signalplättchen 30 einstellende, elektrische Potential trägt.

Die Aufnahme 48 für die Kontaktnadel 50 ist im Steckerinneren von einer Isolierbüchse 52 aus Teflon (alternativ: z.B. Keramik) umgeben, die wiederum umfangsseitig von einer zylindrischen Kontaktbuchse 54 formschlüssig umschlossen ist. Eine weitere, äußere Isolierbüchse 56, die die aus Kontaktnadelaufnahme 48, innerer Isolierbüchse 52 und zylindrischer Kontaktbüchse 54 gebildete Anordnung umschließt, ist dann umfangsseitig in eine entsprechende Längsbohrung des Sensorgehäuses 12 eingesetzt. Mantelseitig wird die äußere Isolierbüchse 56 im Bereich des Steckerabschnitts 22 von einem Steckerrand 58 umgeben, welcher einstückig mit dem Sensorgehäuse 12 ausgebildet ist und über einen Teil seiner Mantelfläche einen Außengewindeabschnitt 60 besitzt.

Auf diese Weise wird steckerseitig ein rotationssymmetrisches, mehrschaliges Steckergebilde geschaffen, welches von außen nach innen einen Masseanschluß (Steckerrand 58), eine Isolation (äußere Büchse 56), eine Kontaktbüchse für das Thermosignal (Büchse 54) sowie eine mittige Kontaktnadel 50 für das Drucksignal aufweist. Mit der Druckerfassung gemeinsam ist auch der zweite Pol des Thermoelements über die gemeinsame Masse geführt.

Genauer beschrieben, weist das im Druckkörper 16 aufgenommene Thermoelement 40 einen ersten Thermodraht (schematisch mit 62 bezeichnet) auf, welcher von einer stirnseitigen Verbindungsstelle 64 zu einem Massekontakt 66 am inneren Ende des Druckstempels 16 geführt ist. Ein zweiter Thermodraht 68 verläuft von der Verbindungsstelle 64 i.w. axial durch den Druckstempel 16, durch den in der Scheibenanordnung 32, 30, 34 gebildeten Durchbruch 38 und durch das Sensorgehäuse 12 bis hin zum Steckerabschnitt 22, wo eine elektrische Verbindung des zweiten Thermodrahtes 68 mit der zylindrischen Kontaktbuchse 54 (durch Einklemmen zwischen der Buchse 54 und der umgebenden Isolierbüchse 56) hergestellt wird. Über praktisch eine gesamte Länge ist dabei der zweite Thermodraht 68 von einer elektrischen Isolierung 70 ummantelt.

Wie in der Fig. 2 gezeigt, ist das Thermoelement 40 so im Stempelbereich 16 angeordnet, daß die Verbindungsstelle 64 des Thermoelements von der (im montierten Zustand das Temperatur- bzw. Druckmedium kontaktierenden) Außenwand 72 des Druckkörpers einen Abstand aufweist. Auch ist das Thermoelement 40 in Richtung auf die Plättchenanordnung 32, 30, 34 durch den Durchbruch 38, der einen geringfügig größeren Durchmesser als das Thermoelement aufweist, druckentlastet.

Zur Anpassung bzw. mechanischen-Abdichtung dienen dann noch am Gehäuse 12 bzw. am Druckkörper 16 vorgesehene O-Ringe 74.

Für den praktischen Einsatz werden Druck- und Temperatursensoren (auch pT-Sensoren genannt) so am Druckraum etwa einer Spritzgießmaschine -- z.B. im Zylinderkopf oder an einem Heißkanal -- befestigt, daß die Außenwand 72 des Druckkörpers 16 in den jeweiligen Druckraum hineinreicht oder mit einer Druckraumwand fluchtet.

Während eines Spritzgießprozesses würden dann am Spritzwerkzeug verschiedene Druckverhältnisse als zeitlich abhängiger Funktionsverlauf auftreten, wobei es insbesondere wichtig ist, die Druckphasen "Einspritzen" und "Nachdruck" zu erfassen und als Eingangsgrößen für die Drucksteuerung zu benutzen.

Gleichzeitig steht durch das Ausgangssignal des Thermoelements 40 ein positionsgenaues Temperatursignal zur Verfügung, welches einen jeweiligen Temperaturwert im Druckraum - - an derselben Stelle wie die Druckmessung -- als ergänzenden Parameter zur Verfahrenssteuerung bereitstellt. Im praktischen Einsatz können Drücke bis etwa 2000 bar bei Temperaturen von 250 bis 400°C im Fall von Kunststoff-Spritzgießprozessen enstehen. Die gezeigte Anordnung ermöglicht dabei nicht nur die präzise Meßwerterfassung mit kurzen Reaktionszeiten (bei Verwendung eines Mantel-Thermoelements nur wenige ms Ansprechzeit) bei den geschilderten Extrembedingungen; darüber hinaus ermöglicht die kompakte Anordnung der Temperaturerfassung im Druckkörper selbst die Verwendung bisheriger Öffnungen bzw. Lager für herkömmliche Drucksensoren (etwa für den Durchmesser 4 mm), ohne daß gesondert Vorkehrungen bzw. Umrüstungen für eine zusätzliche Temperaturmessung erfolgen müßten.

Auch zeigt der praktische Einsatz des erfindungsgemäßen Druck- und Temperatursensors herausragende Eigenschaften im Bezug auf Reproduzierbarkeit der Druck- und Temperaturwerte, so daß die Erfindung insbesondere für anspruchsvolle, komplexe Steuerungsanwendungen geeignet ist. Nicht zuletzt ermöglicht die zusätzliche Temperaturerfassung, etwa am Einspritzkanal, eine wesentlich präzisere, etwa auch Materialspezifika erfassende Prozeßsteuerung bei optimaler lokaler Genauigkeit und lokaler Übereinstimmung von Druck- und Temperaturwert.

Fig. 3 zeigt eine leicht abgewandelte, alternative Ausführungsform zum Druck- und Temperatursensor gemäß Fig. 2.

Während das Thermoelement der Fig. 2, bezogen auf die druckseitige Außenwand 72, im Druckkörper 16 verborgen angeordnet ist, ist in der Fig. 3 eine Ausführungsform mit einem Mantelthermoelement 76-gezeigt, welches durch frontseitiges Einsetzen in-die Außenwand 72, Verschweißen und Abschleifen bündig mit der Außenwand 72 in einen Druckraum hineinreicht.

Ferner ist im Ausführungsbeispiel der Fig. 3 der masseseitige Pol des Thermoelements (Thermodraht 62) nicht im Bereich des Druckkörpers 16 kontaktiert und so nach Masse geführt, sondern zusammen mit dem signalführenden zweiten Thermodraht 68 durch eine kapazitiv abschirmende Führung 78 bis zum Steckerabschnitt 22 geführt. Dort ist dann der Signalleiter 68 in bereits beschriebener Weise mit der zylindrischen Kontaktbuchse 54 verbunden, während die Massezuführung des Mantelthermoelements 76 durch Verklemmen zwischen äußerer Isolierbüchse 56 und Sensorgehäuse 12 erst im Bereich des Steckerabschnitts 22 eine Masseverbindung erhält.

Insbesondere durch die Ausführungsform gemäß Fig. 3 ist daher eine kapazitiv besser abgeschirmte Ausführung erreicht, die das hochohmige Drucksignal in vorteilhafter Weise vor Störeinflüssen schützt.

Bei dem in der Fig. 3 beschriebenen Thermoelement handelt es sich um ein Ni/NiCr-Mantelthermoelement mit einem abschirmenden Metallmantel 78, welcher in der in Fig. 3 gezeigten Weise durch den Druckkörper 16 bzw. das Gehäuse 12 zum Steckerabschnitt geführt ist.

Während zudem im beschriebenen Ausführungsbeispiel der Fig. 3 ein Pol des Mantelthermoelements an Masse gelegt ist, bietet es sich gemäß einer weiteren, nicht gezeigten Ausführungsalternative an, beide Pole des Mantelthermoelementes getrennt auszuführen, um keinen schädlichen Spannungsabfall zu erhalten und eine präzisere Auswertung der Thermospannung zwischen den Thermodrähten selbst vornehmen zu können. Eine solche Lösung könnte etwa so aussehen, daß die das Thermosignal führende, zylindrische Kontaktbüchse 54 in Umfangsrichtung zweipolig geteilt sein könnte und ein jeweiliger, so enstehender Kontaktabschnitt mit einem zugehörigen Thermoelementpol verbunden sein könnte. Ein entsprechend extern kommunizierender Stecker würde dann beide Thermoelementzuleitungen masseunabhängig abgreifen können.

Während die vorbeschriebenen Ausführungsformen in bevorzugter Weise ein Mantelthermoelement als Temperaturfühler eingesetzt haben, eignen sich im Grundsatz auch andere Fühler zur Temperaturerfassung im Druckkörper selbst sowie zum Erzeugen eines entsprechend elektrisch abzugreifenden Signals, neben dem Drucksignal.

Auch ist die Drucksensorik nicht auf die beschriebene Ausführungsform beschränkt; es können etwa auch mehrere Module von Piezoscheiben -- z.B. 6 oder 10 -- oder ein grundsätzlich anderes Druckerfassungsprinzip Verwendung finden.

Auch ist die vorliegende Erfindung nicht auf die in den beschriebenen Ausführungsformen dargestellte, koaxiale Anschlußtechnik beschränkt; vielmehr liegt es im Belieben des Fachmannes, anforderungsgemäß eine geeignete Steckerkonstruktion vorzunehmen, welche sowohl eine einfache Herstellung und Verbindung als auch Kontaktsicherheit und Abschirmung bietet.

## Patentansprüche

1. Druck- und Temperatursensor, insbesondere zur Erfassung eines Druck- und Temperaturzustandes in einer Kavität einer Spritzgießvorrichtung od. dgl., mit einem mit einem Sensorgehäuse (12) zusammenwirkenden, in einem montierten Zustand mit einem Druck in der Kavität beaufschlagbaren Druckkörper (16), der zum Übertragen des Druckes auf eine piezo-elektrisch wirkende Sensoranordnung (30, 32, 34) vorgesehen ist,
wobei ein durch die Sensoranordnung (30, 32, 34) als Reaktion auf den Druck erzeugtes elektrisches Signal mittels einer elektrischen Kontakteinrichtung (48, 50, 52, 54, 56, 58) aus dem Sensorgehäuse (12) herausgeführt ist,
und wobei in dem Druckkörper (16) ein thermoelektrisches Detektorelement (40) eingesetzt ist und ein durch das Detektorelement (40) erzeugtes, elektrisches Temperatursignal über die elektrische Kontakteinrichtung (48, 50, 52, 54, 56, 58) herausgeführt ist, **dadurch gekennzeichnet, dass**
ein die Sensoranordnung aufweisender Übergangsbereich zwischen dem Druckkörper (16) und einem Gehäuseansatz (14) des Sensorgehäuses (12) von einer Vorspannhülse (18) umschlossen ist, die den Druckkörper (16) druckelastisch mit dem Sensorgehäuse (12) verbindet.

2. Sensor nach Anspruch 1, **dadurch gekennzeichnet, daß** der Druckkörper als i.w. zylindrischer Druckkörper realisiert ist.

3. Sensor nach Anspruch 2, **dadurch gekennzeichnet, daß** der Druckkörper einen Außendurchmesser von etwa 4 mm aufweist.

4. Sensor nach einem der Ansprüche 1 bis 3, **dadurch gekennzeichnet, daß** die Sensoranordnung mindestens ein piezo-elektrisches Kristallplättchen aufweist, welches über eine Flachseite mit dem Druckkörper (16) zusammenwirkt.

5. Sensor nach einem der Ansprüche 1 bis 4, **dadurch gekennzeichnet, daß** das thermoelektrische Sensorelement als langgestrecktes Mantelthermoelement realisiert ist.

6. Sensor nach einem der Ansprüche 1 bis 5, **dadurch gekennzeichnet, daß** der Druckkörper (16) druckseitig eine Druckangriffsfläche (72) ausbildet und ein druckseitiges Ende des thermoelektrischen Sensorelements i.w. flächig mit der Druckangriffsfläche (72) in dieser freigelegt ist.

7. Sensor nach einem der Ansprüche 1 bis 6, **dadurch gekennzeichnet, daß** das thermoelektrische Sensorelement eine gegenüber dem Druckkörper (16), der Sensoranordnung (30, 32, 34) sowie dem Sensorgehäuse (12) wirkende, kapazitive Abschirmung aufweist.

8. Sensor nach einem der Ansprüche 1 bis 7, **dadurch gekennzeichnet, daß** eine Zuleitung für das thermoelektrische Detektorelement durch einen i.w. zentrisch in der Sensoranordnung gebildeten Durchbruch geführt ist.

9. Sensor nach einem der Ansprüche 1 bis 8, **dadurch gekennzeichnet, daß** die elektrische Kontakteinrichtung als Stecker mit mindestens einer koaxialen Kontaktbüchse an der dem Druckkörper entgegengesetzten Seite des Sensorgehäuses realisiert ist.

10. Sensor nach Anspruch 9, **dadurch gekennzeichnet, daß** elektrische Anschlüsse des thermoelektrischen Sensorelements über die elektrische Kontakteinrichtung getrennt und massefrei herausgeführt sind.

11. Sensor nach Anspruch 10, **dadurch gekennzeichnet, daß** zwei elektrische Pole des thermoelektrischen Detektorelements als Kontaktflächen einer gemeinsamen Kontaktbüchse der Kontakteinrichtung herausgeführt sind.

## Claims

1. Pressure and temperature sensor, in particular for the detection of a pressure and temperature state in a cavity of an injection moulding apparatus or the like, with a pressure hull (16) which cooperates with a sensor housing (12) and in an assembled state can be subjected to a pressure in the cavity and which is provided for transmitting the pressure to a piezoelectrically acting sensor assembly (30, 32, 34), wherein an electrical signal generated by the sensor assembly (30, 32, 34) as a reaction to the pressure is passed out of the sensor housing (12) by means of an electrical contact device (48, 50, 52, 54, 56, 58), and wherein in the pressure hull (16) a thermoelectric detector element (40) is inserted and an electrical temperature signal generated by the detector element (40) is passed out via the electrical contact device (48, 50, 52, 54, 56, 58), **characterised in that** a transition zone comprising the sensor assembly between the pressure hull (16) and a housing attachment (14) of the sensor housing (12) is surrounded by a pretensioning sleeve (18) which connects the pressure hull (16) with elasticity of compression to the sensor housing (12).

2. Sensor according to claim 1, **characterised in that** the pressure hull is constructed as a substantially cylindrical pressure hull.

3. Sensor according to claim 2, **characterised in that** the pressure hull has an outside diameter of approximately 4 mm.

4. Sensor according to any of claims 1 to 3, **characterised in that** the sensor assembly comprises at least one piezoelectric crystal wafer which cooperates via a flat side with the pressure hull (16).

5. Sensor according to any of claims 1 to 4, **characterised in that** the thermoelectric sensor element is constructed as an elongate shell thermoelement.

6. Sensor according to any of claims 1 to 5, **characterised in that** the pressure hull (16) on the pressure side forms a pressure-applying - surface (72) and one end of the thermoelectric sensor element on the pressure side is exposed in substantially planar relationship with the pressure-applying surface (72) in the latter.

7. Sensor according to any of claims 1 to 6, **characterised in that** the thermoelectric sensor element comprises a capacitive shield which acts opposite the pressure hull (16), the sensor assembly (30, 32, 34) and the sensor housing (12).

8. Sensor according to any of claims 1 to 7, **characterised in that** a supply wire for the thermoelectric detector element is passed through an aperture formed substantially centrally in the sensor assembly.

9. Sensor according to any of claims 1 to 8, **characterised in that** the electrical contact device is constructed as a plug with at least one coaxial contact bush on the side of the sensor housing opposite the pressure hull.

10. Sensor according to claim 9, **characterised in that** electrical terminals of the thermoelectric sensor element are passed out via the electrical contact device separately and unearthed.

11. Sensor according to claim 10, **characterised in that** two electrical poles of the thermoelectric detector element are passed out as contact surfaces of a common contact bush of the contact device.

## Revendications

1. Capteur de température et de pression, en particulier pour la détection d'un état de température et de pression dans une cavité d'un dispositif de moulage par injection ou similaire, avec un corps de pression (16) agissant avec un boîtier de capteur (12) susceptible d'être actionné à l'état monté par une pression dans la cavité, le corps étant disposé de sorte à transmettre la pression sur un système de capteur (30, 32,34) à fonctionnement piézo-électrique, dans lequel un signal électrique généré par le système de capteur (30, 32,34) en réaction à la pression est conduit hors du boîtier de capteur au moyen d'un système de contact électrique (48, 50, 52, 54, 56, 58),
et dans lequel un élément de détection (40) thermoélectrique est disposé dans le corps de pression (16) et un signal de température électrique généré par l'élément de détection (40) est conduit vers l'extérieur par l'intermédiaire du système de contact électrique (48, 50, 52, 54, 56, 58),
**caractérisé en ce que** :
- une zone de jonction présentant le système de capteur entre le corps de pression (16) et une saillie de boîtier (14) du boîtier de capteur (12) est entourée par un manchon de précontrainte (18), le manchon reliant le boîtier de capteur (12) au corps de pression (16) de façon élastique en pression.

2. Le capteur selon la revendication 1, **caractérisé en ce que** le corps de pression est réalisé sensiblement sous forme de corps de pression cylindrique.

3. Le capteur selon la revendication 2, **caractérisé en ce que** le corps de pression présente un diamètre extérieur d'environ 4mm.

4. Le capteur de l'une des revendications 1 à 3, **caractérisé en ce que** le système de capteur présente au moins une lamelle cristalline piézo-électrique, qui agit ensemble avec le corps de pression (16) sur un côté plat.

5. Le capteur selon l'une des revendications 1 à 4, **caractérisé en ce que** l'élément de détection thermoélectrique est réalisé sous forme de chemise d'élément thermique allongée.

6. Le capteur selon l'une des revendications 1 à 5, **caractérisé en ce que** le corps de pression (16) forme une surface d'attaque de pression (72) du côté de la pression, et une extrémité du côté de la pression de l'élément de capteur thermoélectrique est monté libre sur et sensiblement dans un même plan que la surface d'attaque de pression (72).

7. Le capteur selon l'une des revendications 1 à 6, **caractérisé en ce que** l'élément de capteur thermoélectrique présente un blindage capacitif agissant en l'isolant du corps de pression (16), du système de capteur (30, 32, 34) ainsi que du boîtier de capteur (12).

8. Le capteur selon l'une des revendications 1 à 7, **caractérisé en ce qu'**une liaison de l'élément de capteur thermoélectrique est guidée dans une fente sensiblement centrale ménagée dans le système de capteur.

9. Le capteur selon l'une des revendications 1 à 8, **caractérisé en ce que** le système de contact électrique est réalisé sur le côté du boîtier de capteur opposé au corps de pression, sous forme de connecteur avec au moins un manchon coaxial de contact.

10. Le capteur selon la revendication 9, **caractérisé en ce que** les connexions de l'élément de capteur thermoélectrique sont séparées du système de contact électrique et sont guidées vers l'extérieur sans masse.

11. Le capteur de la revendication 10, **caractérisé en ce que** deux pôles électriques de l'élément de détection sont conduits vers l'extérieur comme surfaces de contact d'un manchon de contact commun du système de contact.
